# EUROPÄISCHE PATENTSCHRIFT

(11) **EP 3 888 951 B1**
(45) Veröffentlichungstag und Bekanntmachung des Hinweises auf die Patenterteilung: **24.04.2024**
(21) Anmeldenummer: 20211237.1
(22) Anmeldetag: 02.12.2020
(51) Int. Cl.: B60C 11/12, B60C 11/03, B60C 11/04

(54) **FAHRZEUGLUFTREIFEN**
PNEUMATIC TYRE
PNEUMATIQUE DE VÉHICULE

(30) Priorität: 30.03.2020 DE 102020204072
(43) Veröffentlichungstag der Anmeldung: 06.10.2021
(73) Patentinhaber: Continental Reifen Deutschland GmbH, 30175 Hannover (DE)
(72) Erfinder: Özüduru, Ahmet, 30419 Hannover (DE); Henze, Eugen, 30419 Hannover (DE); Pagac, Lubomir, 30419 Hannover (DE)
(74) Vertreter: Continental Corporation

(56) Entgegenhaltungen:
- EP-A1- 0 973 652
- EP-A1- 3 020 576
- EP-A1- 3 321 104
- EP-A1- 3 375 633
- EP-A2- 2 489 526
- DE-A1-102018 208 670
- JP-A- 2016 137 749

## Beschreibung

Die Erfindung betrifft einen Fahrzeugluftreifen mit einem Laufstreifen mit zumindest einer mittleren Profilrippe, welche an jeder Seite von je einer Umfangsrille begrenzt ist und welche über ihren Umfang mit einer Vielzahl von Einschnitten versehen ist, welche in Draufsicht parallel bzw. im Wesentlichen parallel zueinander sowie zur axialen Richtung - bezogen auf eine die Enden ihrer Einschnittmittelebene verbindende gerade Linie - unter einem Winkel von 0° bis 50° verlaufen, in eine der Umfangsrillen einmünden, eine Breite von 0,4 mm bis 1,2 mm, eine maximale Tiefe von 75% bis 100% der Profiltiefe und bei der Umfangsrille jeweils eine Grundanhebung aufweisen, wobei bei im Wesentlichen parallel zueinander verlaufenden Einschnitten ein Einschnitt mit einem Winkel einer ersten Größe abwechselnd auf einen Einschnitt mit einem Winkel einer sich von der ersten Größe um bis zu 15° unterscheidenden zweiten Größe folgt, wobei an die Einschnitte radial außerhalb der Grundanhebung jeweils eine in die Umfangsrille einmündende Aussparung anschließt.

Ein derartiger Fahrzeugluftreifen ist beispielsweise aus der DE 10 2018 208 670 A1 bekannt. Der Reifen weist einen Laufstreifen mit zumindest einer beidseitig von Umfangsrillen begrenzten Profilrippe auf, welche mit in beide Umfangsrillen einmündenden Einschnitten versehen ist. Die Einschnitte verlaufen zur axialen Richtung unter einem Winkel von 20° bis 30°, weisen eine Breite von 0,4 mm bis 1,5 mm sowie eine maximale Tiefe auf, welche um 1,0 mm bis 2,0 mm geringer ist als die Profiltiefe, die 6,5 mm bis 9,5 mm beträgt. Die Einschnitte weisen ferner randseitige Einschnittabschnitte auf, in welchen sich jeweils eine Grundanhebung befindet. Radial außerhalb der Grundanhebung sind die Einschnitte an einem ihrer Einschnittwände mit einer Fase versehen, welche eine in die Umfangsrille einmündende Aussparung begrenzt. Die Grundanhebungen erhöhen die Steifigkeit der Profilrippe, insbesondere im seitlichen an die Umfangsrille anschließenden Rippenbereich, die Fasen ermöglichen eine verwirbelungsarme Wassereinströmung in den Einschnitt sowie eine gute Entwässerung der Profilrippe.

Aus der EP 0 973 652 B1 ist ein Fahrzeugluftreifen mit einem Laufstreifen mit zwei mittleren Profilrippen bekannt, welche beidseitig von Umfangsrillen begrenzt sind. Die mittleren Profilrippen sind von seichten Querrillen durchquert, von deren Rillengrund jeweils ein Einschnitt ausgeht. Zwischen aufeinanderfolgenden Querrillen verlaufen im Wesentlichen in Umfangsrichtung ausgerichtete weitere Einschnitte, welche in radialer Richtung bis auf das Niveau des Einschnittgrunds der von den Rillengründen der Querrillen ausgehenden Einschnitte reichen. Der Reifen soll einen geringen Rollwiderstand sowie gute Traktionseigenschaften auf nasser und mit schneebedeckter Fahrbahn aufweisen.

Die EP 2 489 526 A2 offenbart einen Fahrzeugluftreifen mit einem Laufstreifen mit einer mittleren Profilblockreihe, welche von Einschnitten durchquert ist. An die Einschnitte schließt eine zur Laufstreifenperipherie geöffnete, in die eine Umfangsrille einmündende Aussparung an, entlang welcher die eine Einschnittwand fortgeführt ist und welche in Richtung zur Umfangsrille tiefer und breiter wird. Der Reifen soll unter Aufrechterhaltung einer guten Trockenperformance ein verbessertes Aquaplaningverhalten aufweisen.

Der Erfindung liegt die Aufgabe zu Grunde, bei einem Fahrzeugluftreifen der eingangs genannten Art, die Wasserableitung von den Einschnitten in die Umfangsrille hinein weiter zu verbessern.

Gelöst wird die gestellte Aufgabe erfindungsgemäß dadurch, dass die Aussparung im Querschnitt des Einschnittes U-förmig ausgeführt ist und sich in Richtung zur Umfangsrille kontinuierlich verbreitert, wobei die Einschnitte einseitig in der mittleren Profilrippe enden und insbesondere in dieselbe Umfangsrille einmünden.

Die gemäß der Erfindung vorgesehene Aussparung weitet den Bereich radial oberhalb des Einschnittes auf, wodurch das durch die Grundanhebung reduzierte Wasserdrainagevermögen ausgeglichen wird. Vom Einschnitt aufgenommenes Wasser wird zuverlässig über die Grundanhebung hinweg und derart in die Umfangsrille abtransportiert, sodass ein "Überlaufen" des Einschnittes verhindert und eine gute Griffwirkung der Einschnittkanten auf nassem Untergrund sichergestellt sind.

Die Wasserableitung durch die Aussparung in den Einschnitt ist zusätzlich verbessert, wenn die Aussparung, im Querschnitt des Einschnittes betrachtet, bezüglich der Einschnittmittelebene symmetrisch U-förmig ausgeführt ist.

Ferner hat es sich im Hinblick auf die Wasserableitung als günstig herausgestellt, wenn die Aussparung eine in der Einschnittmittelebene sowie in der Erstreckungsrichtung des Einschnittes ermittelte maximale Länge von 4,0 mm bis 15,0 mm, insbesondere von 6,0 mm bis 10,0 mm, aufweist.

In diesem Zusammenhang ist es ferner von Vorteil, wenn die Aussparung in radialer Richtung an ihrer tiefsten Stelle eine Tiefe von 1,0 mm bis 40% der maximalen Tiefe des Einschnittes, vorzugsweise von 1,5 mm bis 2,5 mm, aufweist.

Für die Wasserableitung in die Umfangsrille ist es ferner günstig, wenn die Aussparung an der Laufstreifenperipherie an der Umfangsrille in Umfangsrichtung eine Einmündungsbreite von 250% bis 600%, insbesondere von 300% bis 500%, besonders bevorzugt von 350% bis 450%, der Breite des Einschnittes aufweist.

Gemäß einer bevorzugten Ausführung weist die Aussparung an der Laufstreifenperipherie zwei gerade sowie bis zur Umfangsrille verlaufende Begrenzungskanten auf, welche miteinander einen Winkel von 10° bis 30°, insbesondere von bis zu 25°, besonders bevorzugt von 13° bis 17°, einschließen. Dadurch wird eine verwirbelungsfrei bzw. verwirbelungsarme Wasserableitung in die Umfangsrille unterstützt.

Gemäß einer weiteren bevorzugten Ausführung weist die Grundanhebung in Erstreckungsrichtung des Einschnittes eine maximale Länge von 60% bis 100%, insbesondere von 70% bis 90%, der maximalen Länge der Aussparung auf. Die Grundanhebung stabilisiert die Profilrippe daher besonders vorteilhaft.

Die Wasserableitung zur Umfangsrille ist weiter verbessert, wenn die Einschnitte in Draufsicht gerade verlaufen oder einen in Draufsicht zumindest über den Großteil ihrer Erstreckung gerade verlaufenden, in die Umfangsrille einmündenden Einschnittabschnitt aufweisen, welcher - bezogen auf die Einschnittmittelebene - eine in die axiale Richtung projizierte Länge von zumindest 70% der in die axiale Richtung projizierten Länge des Einschnittes aufweist.

Bei einer weiteren bevorzugten Ausführung weist die Aussparung, im Querschnitt des Einschnittes betrachtet, zur radialen Richtung unter einem Winkel von 0° bis 6°, insbesondere von bis zu 3°, verlaufende Flanken auf.

Für die Steifigkeit der Profilrippe ist es von Vorteil, wenn im Einschnitt zumindest eine weitere Grundanhebung ausgebildet ist.

Ferner ist es günstig, wenn der Einschnitt im Bereich der Grundanhebung(en) eine Tiefe von 40% bis 80%, insbesondere von 60% bis 70%, seiner maximalen Tiefe aufweist.

Bevorzugter Weise beträgt der Winkel, unter welchem die Einschnitte zur axialen Richtung verlaufen, 25° bis 40°.

Bei einem Fahrzeugluftreifen, dessen Laufstreifen zwei, an jeder Seite von je einer Umfangsrille begrenzte mittlere Profilrippen aufweist, ist es von Vorteil, wenn die Einschnitte einseitig in den Profilrippen enden und bei jeder Profilrippe jeweils insbesondere in dieselbe Umfangsrille einmünden.

Bei einem solchen Reifen ist es bevorzugt, wenn die Einschnitte - ermittelt an der Laufstreifenperipherie - eine in die axiale Richtung projizierte Länge von 70% bis 95%, insbesondere von 80% bis 90%, der Breite der mittleren Profilrippe aufweisen. Solche Einschnitte sind im Hinblick auf die Entwässerung der Profilrippe günstig, wobei eine vorteilhaft hohe Steifigkeit der Profilrippe erhalten bleibt.

Für die Entwässerung des Laufstreifenprofils ist es ferner günstig, wenn die mittlere(n) Profilrippe(n) seitlich der Reifenäquatorialebene verläuft bzw. verlaufen und die Einschnitte in die die mittlere(n) Profilrippe(n) laufstreifenaußenseitig begrenzende(n) Umfangsrille(n) einmündet bzw. einmünden.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eines Laufstreifens eines Fahrzeugluftreifens mit einer Ausführungsvariante der Erfindung,
Fig. 2 eine vergrößerte Ansicht des Details Z₂ der Fig. 1,
Fig. 3 einen Schnitt entlang der Linie III-III der Fig. 2,
Fig. 4 einen Schnitt entlang der Linie IV-IV der Fig. 2 und
Fig. 5 eine Schrägansicht gemäß der durch den Pfeil S₅ in Fig. 2 angedeuteten Sichtrichtung.

Gemäß der Erfindung ausgeführte Fahrzeugluftreifen sind insbesondere Reifen in Radialbauart für Personenkraftwagen, Vans oder Light-Trucks.

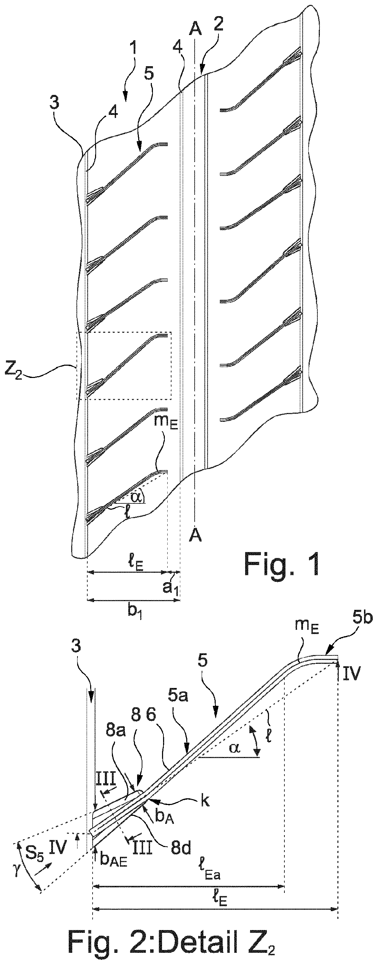

Fig. 1 zeigt eine Draufsicht auf einen Umfangsabschnitt eines Laufstreifens eines Fahrzeugluftreifens mit zwei in einem zentralen Laufstreifenbereich verlaufenden, mittleren Profilrippen 1, welche von einer entlang der Reifenäquatorialebene (Linie A-A) sowie beim gezeigten Ausführungsbeispiel in Draufsicht gerade verlaufenden, zentralen Umfangsrille 2 voneinander getrennt sind. Die mittleren Profilrippen 1 sind laufstreifenaußenseitig von in Fig. 1 lediglich angedeuteten, schulterseitigen Umfangsrillen 3 von insbesondere in an sich bekannter Weise gestalteten schulterseitigen Profilrippen getrennt und weisen, ermittelt an der Laufstreifenperipherie, in axialer Richtung eine größte Breite b₁ auf.

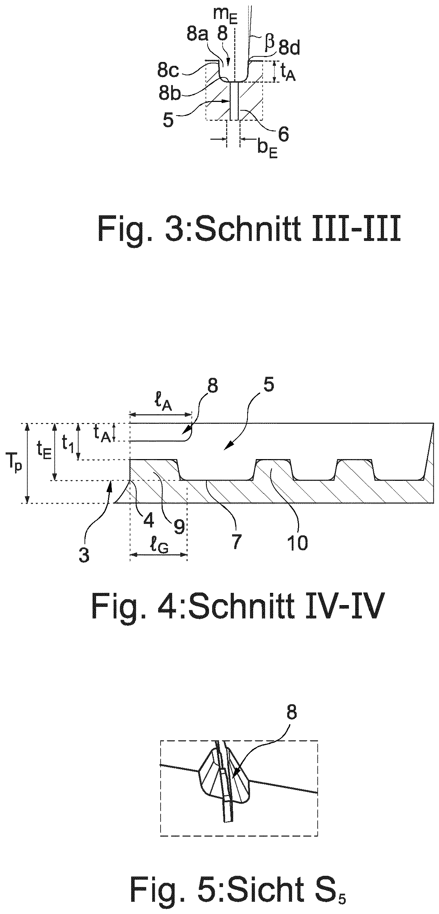

Die Umfangsrillen 2, 3 sind in der für den jeweiligen Fahrzeugluftreifen vorgesehenen Profiltiefe T_{P} (Fig. 4) ausgeführt, welche für Personenkraftwagen, Vans oder Light-Trucks üblicherweise 6,5 mm bis 9,0 mm beträgt und weisen an den Profilrippen 1, 2 ausgebildete Rillenflanken 4 auf.

Die mittleren Profilrippen 1 sind über ihren Umfang jeweils mit einer Vielzahl von Einschnitten 5 versehen, welche innerhalb der jeweiligen Profilrippe 1 in Draufsicht im Wesentlichen parallel zueinander verlaufen, in Umfangsrichtung voneinander im Wesentlichen gleich große gegenseitige Abstände von vorzugsweise 20,0 mm bis 30,0 mm aufweisen, vor der zentralen Umfangsrille 2 in einem in axialer Richtung ermittelten Abstand a₁ enden und in die jeweilige schulterseitige Umfangsrille 3 einmünden. Die Einschnitte 5 verlaufen in Draufsicht - bezogen auf eine die Enden ihrer Einschnittmittelebene m_{E} verbindende gerade Linie l - zur axialen Richtung unter einem Winkel α von 0° bis 50°, insbesondere von 25° bis 40° (siehe auch Fig. 2). Beim gezeigten Ausführungsbeispiel sind in jeder Profilrippe 1 Einschnitte 5 mit einem Winkel α einer ersten Größe und Einschnitte 5 mit einem Winkel α einer sich von der ersten Größe kaum merkbar unterscheidenden zweiten Größe vorgesehen, wobei ein Einschnitt 5 mit einem Winkel α der ersten Größe abwechselnd auf einen Einschnitt 5 mit einem Winkel α der zweiten Größe folgt. Der Winkel α der einen Größe unterscheidet sich vom Winkel α der anderen Größe um bis zu 15°, wodurch sich das Abrollgeräusch günstig beeinflussen lässt. Dementsprechend verlaufen die Einschnitte 5, wie bereits erwähnt, in Draufsicht im Wesentlichen parallel zueinander. Ferner weisen die Einschnitte 5 mit dem geringfügig größeren Winkel α eine kaum merkbare Knickstelle k (Fig. 2) auf, unterscheiden sich ansonsten jedoch nicht von den Einschnitten 5 mit dem geringfügig kleineren Winkel α. Die in der einen mittleren Profilrippe 1 verlaufenden Einschnitte 5 sind bezüglich der Umfangsrichtung gleichsinnig zu den in der anderen mittleren Profilrippe 1 verlaufenden Einschnitten 5 orientiert.

Die Einschnitte 5 weisen - ermittelt an der Laufstreifenperipherie - eine in die axiale Richtung projizierte Länge l_{E} von 70% bis 95%, insbesondere von 80% bis 90%, der Breite b₁ der mittleren Profilrippen 1 auf, wobei die projizierte Länge l_{E} vorzugsweise derart gewählt ist, dass der erwähnte Abstand a₁ 2,0 mm bis 4,0 mm beträgt.

Die weitere Ausgestaltung der Einschnitte 5 wird nachfolgend anhand eines einzelnen, eine kaum merkbare Knickstelle k aufweisenden Einschnittes 5 sowie unter Bezugnahme auf Fig. 2 bis Fig. 5 näher erläutert.

Gemäß Fig. 2 weist der Einschnitt 5 beim gezeigten Ausführungsbeispiel einen in die schulterseitige Umfangsrille 3 einmündenden, in Draufsicht bezogen auf die Einschnittmittelebene m_{E} zumindest weitgehend gerade verlaufenden Einschnittabschnitt 5a und einen in Draufsicht bogenförmige sowie im Wesentlichen in axialer Richtung verlaufenden Einschnittabschnitt 5b auf. Der gerade verlaufende Einschnittabschnitt 5a weist - bezogen auf die Einschnittmittelebene m_{E} - eine an der Laufstreifenperipherie ermittelte, in die axiale Richtung projizierte Länge l_{Ea} von zumindest 70%, insbesondere von zumindest 75%, der bereits erwähnten projizierten Länge l_{E} des Einschnittes 5 auf.

Der Einschnitt 5 ist durch zwei einander gegenüberliegende, sich insbesondere in radialer Richtung erstreckende Einschnittwände 6 (Fig. 3) und einen Einschnittgrund 7 (Fig. 4) begrenzt und weist zwischen den Einschnittwänden 6 eine insbesondere konstante Breite b_{E} (Fig. 3) von 0,4 mm bis 1,0 mm, insbesondere von bis zu 0,8 mm, sowie in radialer Richtung eine maximale Tiefe t_{E} (Fig. 4) von 75% bis 100%, insbesondere von bis zu 90%, der Profiltiefe T_{P} (Fig. 4) auf.

Wie Fig. 4 zeigt, sind am Einschnittgrund 7, eine an die Umfangsrille 3 angrenzende, randseitige Grundanhebung 9 und zwei im Wesentlichen gleichmäßig im Einschnitt 5 verteilte, übereinstimmend ausgeführte mittlere Grundanhebungen 10 ausgebildet. Die Grundanhebungen 9, 10 verbinden die beiden Einschnittwände 6, sind, im Längsschnitt des Einschnittes 5 betrachtet, rechteck- oder trapezförmig und verringern die Tiefe des Einschnittes 5 lokal auf eine Tiefe ti von 40% bis 80%, insbesondere von 60% bis 70%, der maximalen Tiefe t_{E} des Einschnittes 5. Die randseitige Grundanhebung 9 weist ermittelt an ihrer in der maximalen Tiefe t_{E} des Einschnittes 5 liegenden Basis in Erstreckungsrichtung des Einschnittes 5 ihre maximale Länge l_{G} auf, auf deren bevorzugte Größe noch eingegangen wird. Bevorzugter Weise ist die randseitige Grundanhebung 9 an der schulterseitigen Umfangsrille 3 von der entsprechenden Rillenflanke 4 begrenzt.

Wie insbesondere Fig. 2, Fig. 4 und Fig. 5 in Kombination miteinander zeigen, schließt an den Einschnitt 5 radial außerhalb der randseitigen Grundanhebung 9 (Fig. 4) eine in die Umfangsrille 3 einmündende, nutartige Aussparung 8 an, welche, in Draufsicht betrachtet, eine in Erstreckungsrichtung des Einschnittes 5 langgezogen dreieckige Form aufweist (Fig. 2). Die Aussparung 8 ist von der randseitigen Grundanhebung 9 in radialer Richtung beabstandet, sodass zwischen der Aussparung 8 und der Grundanhebung 9 der Einschnitt 5 fortgeführt ist, welcher, wie bereits erwähnt, in die Umfangsrille 3 einmündet (Fig. 4).

Gemäß Fig. 3 ist die Aussparung 8, im Querschnitt des Einschnittes 5 betrachtet, bezüglich der Einschnittmittelebene m_{E} bevorzugt symmetrisch U-förmig ausgeführt und von einem an der einen Seite des Einschnittes 5 ausgebildeten Aussparungsteil 8a und einem diesen gegenüberbefindlichen, an der anderen Seite des Einschnittes 5 ausgebildeten Aussparungsteil 8a gebildet (siehe auch Fig. 2). Die Aussparung 8 ist, ebenfalls im Querschnitt des Einschnittes 5 betrachtet, von einem mittig vom Einschnitt 5 unterbrochenen Boden 8b und zwei Flanken 8c begrenzt, wobei die Flanken 8c jeweils einen der Aussparungsteile 8a mitbegrenzen und zur radialen Richtung unter einem Winkel β von 0° bis 6°, insbesondere von bis zu 3°, verlaufen.

Die Aussparung 8 weist eine in der Einschnittmittelebene m_{E} sowie in Erstreckungsrichtung des Einschnittes 5 ermittelte maximale Länge l_{A} (Fig. 4) von 4,0 mm bis 15,0 mm, insbesondere von 6,0 mm bis 10,0 mm, sowie in radialer Richtung eine Tiefe t_{A} (Fig. 3, Fig. 4) von mindestens 1,0 mm und maximal 40% der maximalen Tiefe t_{E} des Einschnittes 5, vorzugsweise von 1,5 mm bis 2,5 mm, auf.

Gemäß Fig. 2 weist die Aussparung 8 an der Laufstreifenperipherie zwei gerade verlaufende Begrenzungskanten 8d auf, an welchen die Flanken 8c enden (Fig. 3) und welche in Draufsicht betrachtet miteinander einen Winkel y von 10° bis 25°, insbesondere von 13° bis 17°, einschließen. Die Aussparung 8 weist eine senkreckt zur Einschnittmittelebene m_{E} zwischen den Begrenzungskanten 8d ermittelte Breite b_{A} auf, welche sich über die Erstreckung der kürzer ausgeführten Begrenzungskante 8d zu ihrer an der Umfangsrille 3 liegenden Einmündung kontinuierlich vergrößert. An ihrer an der Umfangsrille 3 liegenden Einmündung weist die Aussparung 8 eine zwischen den entsprechenden Enden der Begrenzungskanten 8d in Umfangsrichtung ermittelte Einmündungsbreite b_{AE} von 250% bis 600%, insbesondere von 300% bis 500%, besonders bevorzugt von 350% bis 450%, der Breite b_{E} (Fig. 3) des Einschnittes 5 auf.

Die bereits erwähnt maximale Länge l_{G} der randseitigen Grundanhebung 9 beträgt vorzugsweise 60% bis 100%, insbesondere 70% bis 90%, der maximalen Länge l_{A} der Aussparung 8.

Bevorzugter Weise sind die mittleren Profilrippen 1 frei von durchquerenden, also in die die jeweilige Profilrippe 1 seitlich begrenzenden Umfangsrillen 3 einmündenden, oder sacknutartig in der jeweiligen Profilrippe 1 endenden Querrillen. Ferner ist es bevorzugt, wenn die mittleren Profilrippen 1 frei von durch durchquerenden Einschnitten sind.

Die Erfindung ist auf das beschriebene Ausführungsbeispiel nicht beschränkt.

Die Einschnitte können auch beidseitig in die die mittlere Profilrippe begrenzenden Umfangsrillen einmünden, wobei sie bei dieser Variante vorzugsweise an beiden Enden mit randseitigen Grundanhebungen und radial außerhalb dieser ausgebildeter Aussparungen versehen sind. Die mittleren Grundanhebungen der Einschnitte sind optional. Die innerhalb einer Profilrippe vorgesehenen Einschnitte können in Draufsicht auch parallel zueinander, also unter übereinstimmenden Winkeln zur axialen Richtung verlaufen. Der Laufstreifen weist zumindest eine mittlere oder zumindest eine schulterseitige Profilrippe mit den beschriebenen Einschnitten auf. Die Einschnitte können in Draufsicht - bezogen auf ihre Einschnittmittelebene auch insgesamt gerade oder einheitlich gebogen, also kreisbogenartig, verlaufen.

### Bezugsziffernliste

- 1: mittlere Profilrippe
- 2: zentrale Umfangsrille
- 3: schulterseitige Umfangsrille
- 4: Rillenflanke
- 5: Einschnitt
- 5a: Einschnittabschnitt
- 5b: Einschnittabschnitt
- 6: Einschnittwand
- 7: Einschnittgrund
- 8: Aussparung
- 8a: Aussparungsteil
- 8b: Boden
- 8c: Flanke
- 8d: Begrenzungskante
- 9: randseitige Grundanhebung
- 10: mittlere Grundanhebung
- A-A: Linie (Reifenäquatorialebene)
- a₁: Abstand
- b₁, b_{E}, b_{A}: Breite
- b_{AE}: Einmündungsbreite
- k: Knickstelle
- l: Linie
- l_{A}: maximale Länge
- l_{E}, l_{Ea}: projizierte Länge
- l_{G}: maximale Länge
- m_{E}: Einschnittmittelebene
- S₅: Pfeil (Sichtrichtung)
- t₁, t_{E}, t_{A}: Tiefe
- T_{P}: Profiltiefe
- Z₂: Detail
- α, β, γ: Winkel

## Patentansprüche

1. Fahrzeugluftreifen mit einem Laufstreifen mit zumindest einer mittleren Profilrippe (1), welche an jeder Seite von je einer Umfangsrille (2, 3) begrenzt ist und welche über ihren Umfang mit einer Vielzahl von Einschnitten (5) versehen ist, welche in Draufsicht parallel bzw. im Wesentlichen parallel zueinander sowie zur axialen Richtung - bezogen auf eine die Enden ihrer Einschnittmittelebene (m_{E}) verbindende gerade Linie (l) - unter einem Winkel (α) von 0° bis 50° verlaufen, in eine der Umfangsrillen (3) einmünden, eine Breite (b_{E}) von 0,4 mm bis 1,2 mm, eine maximale Tiefe (T_{E}) von 75% bis 100% der Profiltiefe (T_{P}) und bei der Umfangsrille (3) jeweils eine Grundanhebung (9) aufweisen, wobei bei im Wesentlichen parallel zueinander verlaufenden Einschnitten (5) ein Einschnitt (5) mit einem Winkel (α) einer ersten Größe abwechselnd auf einen Einschnitt (5) mit einem Winkel (α) einer sich von der ersten Größe um bis zu 15° unterscheidenden zweiten Größe folgt, wobei an die Einschnitte (5) radial außerhalb der Grundanhebung (9) jeweils eine in die Umfangsrille (3) einmündende Aussparung (8) anschließt,
**dadurch gekennzeichnet,**
**dass** die Aussparung (8) im Querschnitt des Einschnittes (5) U-förmig ausgeführt ist und sich in Richtung zur Umfangsrille (3) kontinuierlich verbreitert, wobei die Einschnitte (5) einseitig in der mittleren Profilrippe (1) enden und insbesondere in dieselbe Umfangsrille (3) einmünden.

2. Fahrzeugluftreifen nach Anspruch 1, **dadurch gekennzeichnet, dass** die Aussparung (8), im Querschnitt des Einschnittes (5) betrachtet, bezüglich der Einschnittmittelebene (m_{E}) symmetrisch U-förmig ausgeführt ist.

3. Fahrzeugluftreifen nach Anspruch 1 oder 2, **dadurch gekennzeichnet, dass** die Aussparung (8) eine in der Einschnittmittelebene (m_{E}) sowie in der Erstreckungsrichtung des Einschnittes (5) ermittelte maximale Länge (l_{A}) von 4,0 mm bis 15,0 mm, insbesondere von 6,0 mm bis 10,0 mm, aufweist.

4. Fahrzeugluftreifen nach einem der Ansprüche 1 bis 3, **dadurch gekennzeichnet, dass** die Aussparung (8) in radialer Richtung an ihrer tiefsten Stelle eine Tiefe (t_{A}) von 1,0 mm bis 40% der maximalen Tiefe (t_{E}) des Einschnittes (5), vorzugsweise von 1,5 mm bis 2,5 mm, aufweist.

5. Fahrzeugluftreifen nach einem der Ansprüche 1 bis 4, **dadurch gekennzeichnet, dass** die Aussparung (8) an der Laufstreifenperipherie an der Umfangsrille (3) in Umfangsrichtung eine Einmündungsbreite (b_{AE}) von 250% bis 600%, insbesondere von 300% bis 500%, besonders bevorzugt von 350% bis 450%, der Breite (b_{E}) des Einschnittes (5) aufweist.

6. Fahrzeugluftreifen nach einem der Ansprüche 1 bis 5, **dadurch gekennzeichnet, dass** die Aussparung (8) an der Laufstreifenperipherie zwei gerade sowie bis zur Umfangsrille (3) verlaufende Begrenzungskanten (8d) aufweist, welche miteinander einen Winkel (γ) von 10° bis 30°, insbesondere von bis zu 25°, besonders bevorzugt von 13° bis 17°, einschließen.

7. Fahrzeugluftreifen nach Anspruch 6, **dadurch gekennzeichnet, dass** die Grundanhebung (9) in Erstreckungsrichtung des Einschnittes (5) eine maximale Länge (l_{G}) von 60% bis 100%, insbesondere von 70% bis 90%, der maximalen Länge (l_{A}) der Aussparung (8) aufweist.

8. Fahrzeugluftreifen nach einem der Ansprüche 1 bis 7, **dadurch gekennzeichnet, dass** die Einschnitte (5) in Draufsicht gerade verlaufen oder einen in Draufsicht zumindest über den Großteil ihrer Erstreckung gerade verlaufenden, in die Umfangsrille (3) einmündenden Einschnittabschnitt (5a) aufweisen, welcher - bezogen auf die Einschnittmittelebene (m_{E}) - eine in die axiale Richtung projizierte Länge (l_{Ea}) von zumindest 70% der in die axiale Richtung projizierten Länge (l_{E}) des Einschnittes (5) aufweist.

9. Fahrzeugluftreifen nach einem der Ansprüche 1 bis 8, **dadurch gekennzeichnet, dass** die Aussparung (8), im Querschnitt des Einschnittes (5) betrachtet, zur radialen Richtung unter einem Winkel (β) von 0° bis 6°, insbesondere von bis zu 3°, verlaufende Flanken (8c) aufweist.

10. Fahrzugluftreifen nach einem der Ansprüche 1 bis 9, **dadurch gekennzeichnet, dass** im Einschnitt (5) zumindest eine weitere Grundanhebung (10) ausgebildet ist.

11. Fahrzeugluftreifen nach einem der Ansprüche 1 bis 10, **dadurch gekennzeichnet, dass** der Einschnitt (5) im Bereich der Grundanhebung(en) (9, 10) eine Tiefe (t₁) von 40% bis 80%, insbesondere von 60% bis 70%, seiner maximalen Tiefe (t_{E}) aufweist.

12. Fahrzeugluftreifen nach einem der Ansprüche 1 bis 11, **dadurch gekennzeichnet, dass** der Winkel (α), unter welchem die Einschnitte (5) zur axialen Richtung verlaufen, 25° bis 40° beträgt.

13. Fahrzeugluftreifen nach einem der Ansprüche 1 bis 12, **dadurch gekennzeichnet, dass** der Laufstreifen zwei, an jeder Seite von je einer Umfangsrille (2, 3) begrenzte mittlere Profilrippen (1) aufweist, wobei die Einschnitte (4) einseitig in den Profilrippen (1) enden und bei jeder Profilrippe (1) jeweils insbesondere in dieselbe Umfangsrille (3) einmünden.

14. Fahrzeugluftreifen nach einem der Ansprüche 1 bis 13, **dadurch gekennzeichnet, dass** die Einschnitte (5) - ermittelt an der Laufstreifenperipherie - eine in die axiale Richtung projizierte Länge (l_{E}) von 70% bis 95%, insbesondere von 80% bis 90%, der Breite (b₁) der bzw. der zugehörigen mittleren Profilrippe (1) aufweisen.

15. Fahrzeugluftreifen nach einem der Ansprüche 1 bis 14, **dadurch gekennzeichnet, dass** die mittlere(n) Profilrippe(n) (1) seitlich der Reifenäquatorialebene (A-A) verläuft bzw. verlaufen und die Einschnitte (4) in die die mittlere(n) Profilrippe(n) (1) laufstreifenaußenseitig begrenzende(n) Umfangsrille(n) (3) einmündet bzw. einmünden.

## Claims

1. Pneumatic vehicle tyre having a tread with at least one middle profile rib (1) which is delimited at each side by in each case one circumferential channel (2, 3) and which is provided over its circumference with a multiplicity of sipes (5), said sipes, in plan view, extending parallel or substantially parallel to one another and - based on a straight line (1) connecting the ends of their sipe central plane (m_{E}) - at an angle (α) of 0° to 50° to the axial direction and opening out into one of the circumferential channels (3) and having a width (b_{E}) of 0.4 mm to 1.2 mm and a maximum depth (T_{E}) of 75% to 100% of the profile depth (T_{P}) and having in each case one base elevation (9) at the circumferential channel (3), wherein, in the case of sipes (5) extending substantially parallel to one another, a sipe (5) having an angle (α) of a first size follows a sipe (5) having an angle (α) of a second size, which differs from the first size by up to 15°, in an alternating manner, wherein the sipes (5) are adjoined radially outside the base elevation (9) by in each case one cutout (8) which opens out into the circumferential channel (3), **characterized**
**in that** the cutout (8) is of U-shaped form in a cross section of the sipe (5) and continuously widens in the direction of the circumferential channel (3), wherein the sipes (5), one-sidedly, end in the middle profile rib (1) and in particular open out into the same circumferential channel (3).

2. Pneumatic vehicle tyre according to Claim 1, **characterized in that**, when viewed in a cross section of the sipe (5), the cutout (8) is of symmetrical U-shaped form in relation to the sipe central plane (m_{E}).

3. Pneumatic vehicle tyre according to Claim 1 or 2, **characterized in that** the cutout (8) has a maximum length (l_{A}), determined in the sipe central plane (m_{E}) and in the direction of extent of the sipe (5), of 4.0 mm to 15.0 mm, in particular of 6.0 mm to 10.0 mm.

4. Pneumatic vehicle tyre according to one of Claims 1 to 3, **characterized in that** the cutout (8) has at its lowest point in a radial direction a depth (t_{A}) of 1.0 mm to 40% of the maximum depth (t_{E}) of the sipe (5), preferably of 1.5 mm to 2.5 mm.

5. Pneumatic vehicle tyre according to one of Claims 1 to 4, **characterized in that**, at the tread periphery, the cutout (8) has at the circumferential channel (3) in a circumferential direction an opening-out width (b_{AE}) of 250% to 600%, in particular of 300% to 500%, particularly preferably of 350% to 450%, of the width (b_{E}) of the sipe (5).

6. Pneumatic vehicle tyre according to one of Claims 1 to 5, **characterized in that**, at the tread periphery, the cutout (8) has two straight delimitation edges (8d) which extend as far as the circumferential channel (3) and which include an angle (γ) of 10° to 30°, in particular of up to 25°, particularly preferably of 13° to 17°, with one another.

7. Pneumatic vehicle tyre according to Claim 6, **characterized in that**, in the direction of extent of the sipe (5), the base elevation (9) has a maximum length (l_{G}) of 60% to 100%, in particular of 70% to 90%, of the maximum length (l_{A}) of the cutout (8).

8. Pneumatic vehicle tyre according to one of Claims 1 to 7, **characterized in that** the sipes (5) extend straight in plan view or have a sipe portion (5a) which, in plan view, extends straight at least over the majority of its extent and opens out into the circumferential channel (3) and which - based on the sipe central plane (m_{E}) - has a length (l_{Ea}) projected into the axial direction of at least 70% of the length (l_{E}) projected into the axial direction of the sipe (5).

9. Pneumatic vehicle tyre according to one of Claims 1 to 8, **characterized in that**, when viewed in a cross section of the sipe (5), the cutout (8) has flanks (8c) which extend at an angle (β) of 0° to 6°, in particular of up to 3°, to the radial direction.

10. Pneumatic vehicle tyre according to one of Claims 1 to 9, **characterized in that** at least one further base elevation (10) is formed in the sipe (5).

11. Pneumatic vehicle tyre according to one of Claims 1 to 10, **characterized in that**, in the region of the base elevation(s) (9, 10), the sipe (5) has a depth (t₁) of 40% to 80%, in particular of 60% to 70%, of its maximum depth (t_{E}).

12. Pneumatic vehicle tyre according to one of Claims 1 to 11, **characterized in that** the angle (α) at which the sipes (5) extend to the axial direction is 25° to 40°.

13. Pneumatic vehicle tyre according to one of Claims 1 to 12, **characterized in that** the tread has two middle profile ribs (1) which are delimited at each side by in each case one circumferential channel (2, 3), wherein, one-sidedly, the sipes (4) end in the profile rib (1) and, at each profile rib (1), in each case in particular open out into the same circumferential channel (3).

14. Pneumatic vehicle tyre according to one of Claims 1 to 13, **characterized in that** the sipes (5) have - determined at the tread periphery - a length (l_{E}) projected into the axial direction of 70% to 95%, in particular of 80% to 90%, of the width (b₁) of the or the associated middle profile rib (1).

15. Pneumatic vehicle tyre according to one of Claims 1 to 14, **characterized in that** the middle profile rib(s) (1) extends/extend laterally in relation to the tyre equatorial plane (A-A), and the sipes (4) open out into the circumferential channel(s) (3) which, at the tread outer side, delimits/delimit the middle profile rib(s) (1).

## Revendications

1. Pneumatique de véhicule avec une bande de roulement avec au moins une nervure de profil centrale (1) qui est délimitée de chaque côté par une rainure circonférentielle respective (2, 3) et qui est pourvue sur sa circonférence d'une pluralité d'entailles (5) qui, en vue de dessus, s'étendent parallèlement ou essentiellement parallèlement entre elles ainsi que selon un angle (α) de 0° à 50° par rapport à la direction axiale - par rapport à une ligne droite (1) reliant les extrémités de leur plan médian d'entaille (m_{E}), débouchent dans l'une des rainures circonférentielles (3), présentent une largeur (b_{E}) de 0,4 mm à 1,2 mm, une profondeur maximale (T_{E}) de 75 % à 100 % de la profondeur de profil (T_{P}) et, présentent chacune une élévation de base (9) au niveau de la rainure circonférentielle (3) ; pour des entailles (5) s'étendant essentiellement parallèlement entre elles, une entaille (5) avec un angle (α) d'une première taille suivant alternativement une entaille (5) avec un angle (α) d'une deuxième taille se différenciant de la première taille de jusqu'à 15°, un évidement (8) débouchant dans la rainure circonférentielle (3) se raccordant respectivement aux entailles (5) radialement à l'extérieur de l'élévation de base (9), **caractérisé en ce que**
l'évidement (8) est réalisé en forme de U dans la section transversale de l'entaille (5) et s'élargit de manière continue en direction de la rainure circonférentielle (3), les entailles (5) se terminant d'un côté dans la nervure de profil centrale (1) et débouchant notamment dans la même rainure circonférentielle (3).

2. Pneumatique de véhicule selon la revendication 1, **caractérisé en ce que** l'évidement (8), considéré dans la section transversale de l'entaille (5), est réalisé en forme de U symétriquement par rapport au plan médian d'entaille (m_{E}).

3. Pneumatique de véhicule selon la revendication 1 ou 2, **caractérisé en ce que** l'évidement (8) présente une longueur maximale (l_{A}), déterminée dans le plan médian d'entaille (mE) ainsi que dans la direction d'extension de l'entaille (5), de 4,0 mm à 15,0 mm, notamment de 6,0 mm à 10,0 mm.

4. Pneumatique de véhicule selon l'une quelconque des revendications 1 à 3, **caractérisé en ce que** l'évidement (8) présente, dans la direction radiale, à son point le plus profond, une profondeur (t_{A}) de 1,0 mm à 40 % de la profondeur maximale (t_{E}) de l'entaille (5), de préférence de 1,5 mm à 2,5 mm.

5. Pneumatique de véhicule selon l'une quelconque des revendications 1 à 4, **caractérisé en ce que** l'évidement (8) à la périphérie de la bande de roulement au niveau de la rainure circonférentielle (3) présente une largeur d'embouchure (b_{AE}) dans la direction circonférentielle de 250 % à 600 %, notamment de 300 % à 500 %, de manière particulièrement préférée de 350 % à 450 %, de la largeur (b_{E}) de l'entaille (5).

6. Pneumatique de véhicule selon l'une quelconque des revendications 1 à 5, **caractérisé en ce que** l'évidement (8) présente, à la périphérie de la bande de roulement, deux bords de délimitation (8d) rectilignes ainsi que s'étendant jusqu'à la rainure circonférentielle (3), qui forment entre eux un angle (γ) de 10° à 30°, notamment de jusqu'à 25°, de manière particulièrement préférée de 13° à 17°.

7. Pneumatique de véhicule selon la revendication 6, **caractérisé en ce que** l'élévation de base (9) présente, dans la direction d'extension de l'entaille (5), une longueur maximale (l_{G}) de 60 % à 100 %, notamment de 70 % à 90 %, de la longueur maximale (l_{A}) de l'évidement (8).

8. Pneumatique de véhicule selon l'une quelconque des revendications 1 à 7, **caractérisé en ce que** les entailles (5) s'étendent sous forme rectiligne en vue de dessus ou présentent une section d'entaille (5a) s'étendant sous forme rectiligne en vue de dessus au moins sur la majeure partie de son extension, débouchant dans la rainure circonférentielle (3), laquelle présente - par rapport au plan médian d'entaille (m_{E}) - une longueur (l_{Ea}) projetée dans la direction axiale d'au moins 70 % de la longueur (l_{E}) de l'entaille (5) projetée dans la direction axiale.

9. Pneumatique de véhicule selon l'une quelconque des revendications 1 à 8, **caractérisé en ce que** l'évidement (8), considéré dans la section transversale de l'entaille (5), présente des flancs (8c) s'étendant par rapport à la direction radiale selon un angle (β) de 0° à 6°, notamment de jusqu'à 3°.

10. Pneumatique de véhicule selon l'une quelconque des revendications 1 à 9, **caractérisé en ce qu'**au moins une autre élévation de base (10) est réalisée dans l'entaille (5).

11. Pneumatique de véhicule selon l'une quelconque des revendications 1 à 10, **caractérisé en ce que** l'entaille (5) présente, dans la zone de la ou des élévations de base (9, 10), une profondeur (t₁) de 40 % à 80 %, notamment de 60 % à 70 %, de sa profondeur maximale (t_{E}).

12. Pneumatique de véhicule selon l'une quelconque des revendications 1 à 11, **caractérisé en ce que** l'angle (α) selon lequel les entailles (5) s'étendent par rapport à la direction axiale est de 25° à 40°.

13. Pneumatique de véhicule selon l'une quelconque des revendications 1 à 12, **caractérisé en ce que** la bande de roulement présente deux nervures de profil centrales (1) délimitées chacune de chaque côté par une rainure circonférentielle (2, 3), les entailles (4) se terminant d'un côté dans les nervures de profil (1) et débouchant respectivement notamment dans la même rainure circonférentielle (3) au niveau de chaque nervure de profil (1).

14. Pneumatique de véhicule selon l'une quelconque des revendications 1 à 13, **caractérisé en ce que** les entailles (5) présentent une longueur (l_{E}) projetée dans la direction axiale - déterminée à la périphérie de la bande de roulement - de 70 % à 95 %, notamment de 80 % à 90 %, de la largeur (b₁) de la nervure de profil centrale (1) ou de la nervure de profil centrale associée.

15. Pneumatique de véhicule selon l'une quelconque des revendications 1 à 14, **caractérisé en ce que** la ou les nervures de profil centrales (1) s'étendent latéralement par rapport au plan équatorial du pneu (A-A) et les entailles (4) débouchent dans la ou les rainures circonférentielles (3) qui délimitent la ou les nervures de profil centrales (1) du côté extérieur de la bande de roulement.
